# EUROPEAN PATENT SPECIFICATION

(11) **EP 2 803 300 B1**
(45) Date of publication and mention of the grant of the patent: **18.05.2016**
(21) Application number: 13005490.1
(22) Date of filing: 25.11.2013
(51) Int. Cl.: A23N 1/02, A47J 19/02, A47J 43/07

(54) **Food processor**
Lebensmittelverarbeiter
Robot-mixeur

(30) Priority: 13.05.2013 CN 201320257792 U
(43) Date of publication of application: 19.11.2014
(73) Proprietor: Ya Horng Electronic Co., Ltd., Tainan City 74555 (TW)
(72) Inventor: Huang, Jin-Yi, 74555 Tainan City (TW)
(74) Representative: Zeitler Volpert Kandlbinder Patent- und Rechtsanwälte Partnerschaft mbB

(56) References cited:
- EP-A1- 2 497 393
- WO-A1-2013/053228
- WO-A1-2013/060986
- CN-A- 102 715 824
- CN-U- 201 790 542

## Description

This invention relates to a food processor, more particularly to a food processor including a rotary processing body that is formed with a blade and processing ribs.

Conventional food processors are useful for extracting juice from food. A conventional food processor normally includes a housing and a cutter member that is disposed rotatably in the housing and that is provided with a blade for cutting the food into residue and juice which are then separated from each other using a filter.

Document EP 2 497 393 A1 discloses a food processor with a rotary body having a conical upper part and a lower part with an upright surrounding wall surrounding a drive shaft.

An object of the present invention is to provide a rotary processing body that can provide improved cutting and squeezing functions.

Another object of the present invention is to provide a food processor that can provide improved cutting and squeezing functions.

According to one aspect of this invention, there is provided a rotary processing body for a food processor. The rotary processing body comprises : a conical upper part; and a lower part that extends from and that is coaxially disposed below the conical upper part. The conical upper part is formed with a blade protruding therefrom. The lower part has an annular radial wall and an upright surrounding wall. The annular radial wall radiates outwardly from the conical upper part, and is formed with spaced apart first processing ribs that protrude therefrom. The upright surrounding wall extends downwardly from the outwardly radiating annular radial wall, cooperates with the annular radial wall to define an annular corner therebetween, and is formed with spaced apart second processing ribs that protrude therefrom.

According to another aspect of this invention, there is provided a food processor that comprises: a housing defining an accommodating space therein; a rotary processing body supported rotatably in the accommodating space, rotatable relative to the housing about a rotation axis, and having a conical upper part and a lower part, the conical upper part cooperating with the housing to define a grinding space therebetween and being formed with a blade protruding therefrom into the grinding space, the lower part having an annular radial wall and an upright surrounding wall, the annular radial wall radiating outwardly from the conical upper part toward the housing, cooperating with the housing to define a processing clearance therebetween, and being formed with spaced apart first processing ribs that protrude therefrom into the processing clearance, the upright surrounding wall extending downwardly from the outwardly radiating annular radial wall and cooperating with the annular radial wall to define an annular corner therebetween; and an annular filter disposed between the housing and the upright surrounding wall and cooperating with the upright surrounding wall to define a processing gap therebetween. The upright surrounding wall is formed with spaced apart second processing ribs that protrude therefrom into the processing gap.

In drawings which illustrate an embodiment of the invention,
Fig. 1 isa perspective view of the preferred embodiment of a food processor according to the present invention;
Fig. 2 is another perspective view of the preferred embodiment, viewed from another angle;
Fig. 3 is an exploded perspective view of the preferred embodiment;
Fig. 4 is another exploded perspective view of the preferred embodiment;
Fig. 5 is a top view of a middle seat of the preferred embodiment;
Fig. 6 is a fragmentary sectional view of the preferred embodiment;
Fig. 7 is a fragmentary enlarged sectional view of the preferred embodiment;
Fig. 8 is a sectional view of a top cover of the preferred embodiment;
Fig. 9 is a bottom view of the top cover of the preferred embodiment;
Fig. 10 is a perspective view of a rotary processing body of the preferred embodiment; and
Fig. 11 is an exploded sectional view of the rotary processing body and the middle seat of the preferred embodiment.

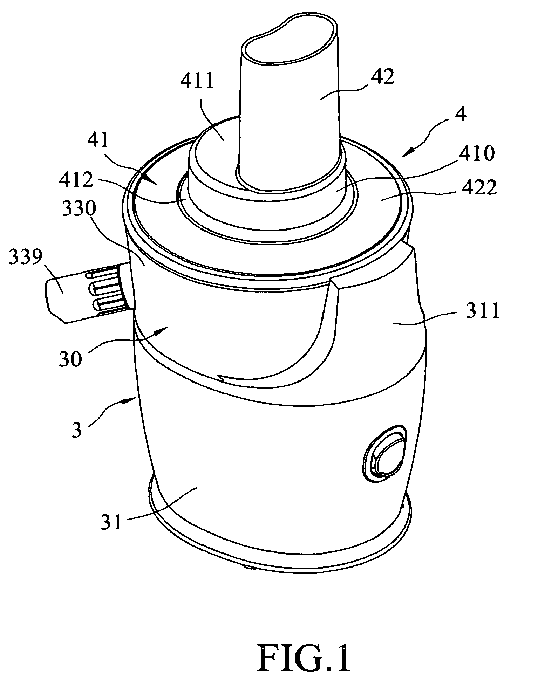

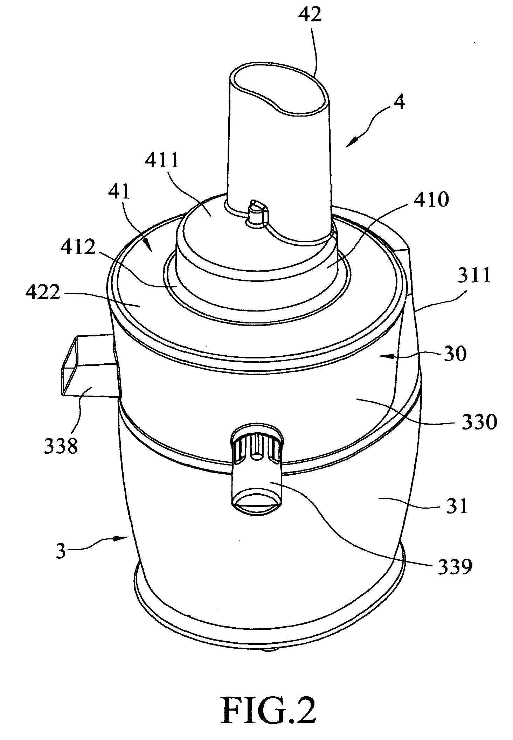

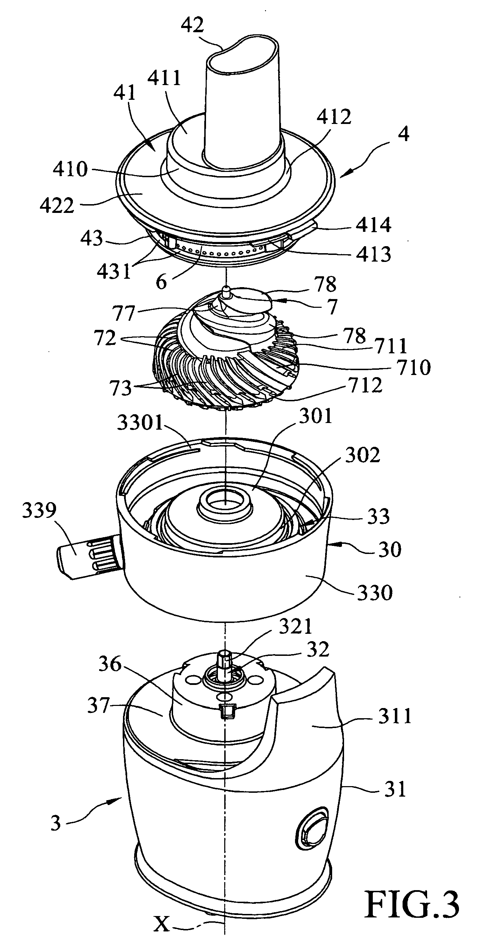

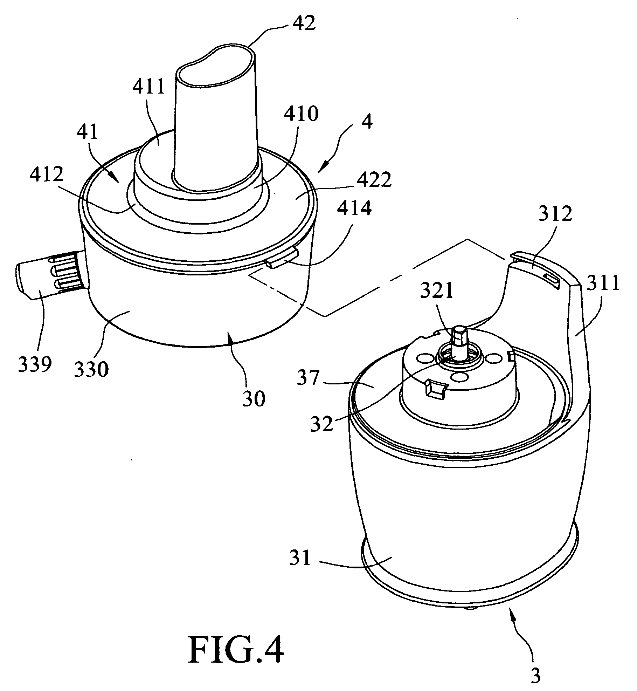

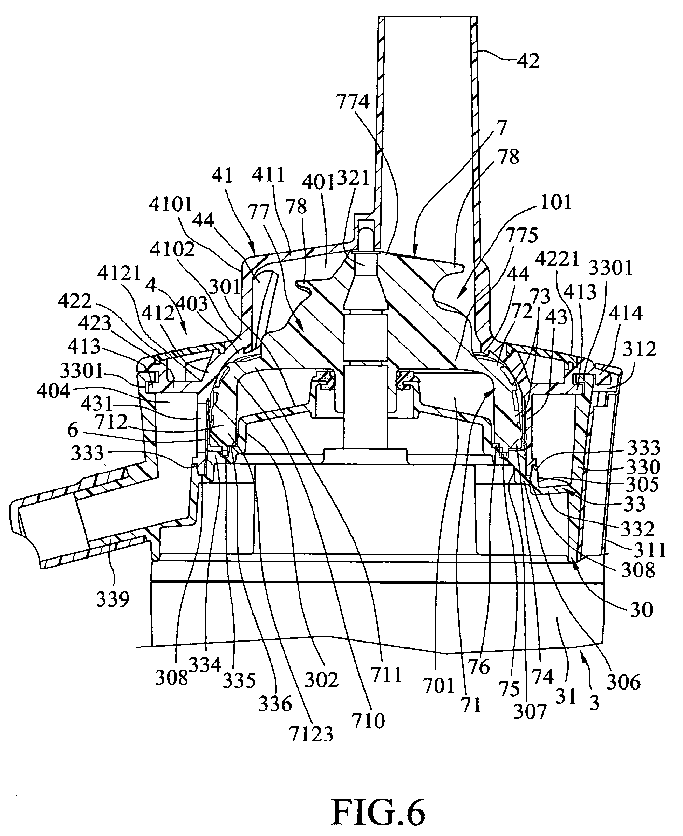

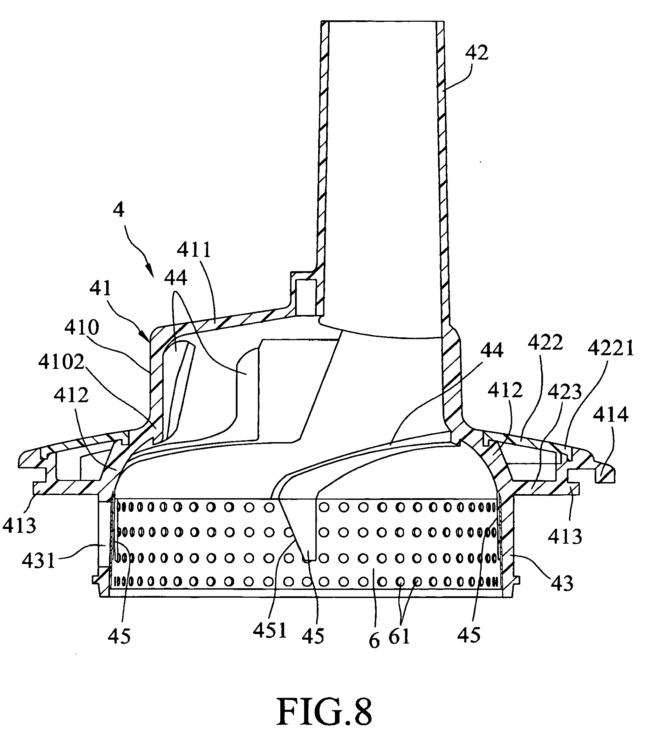

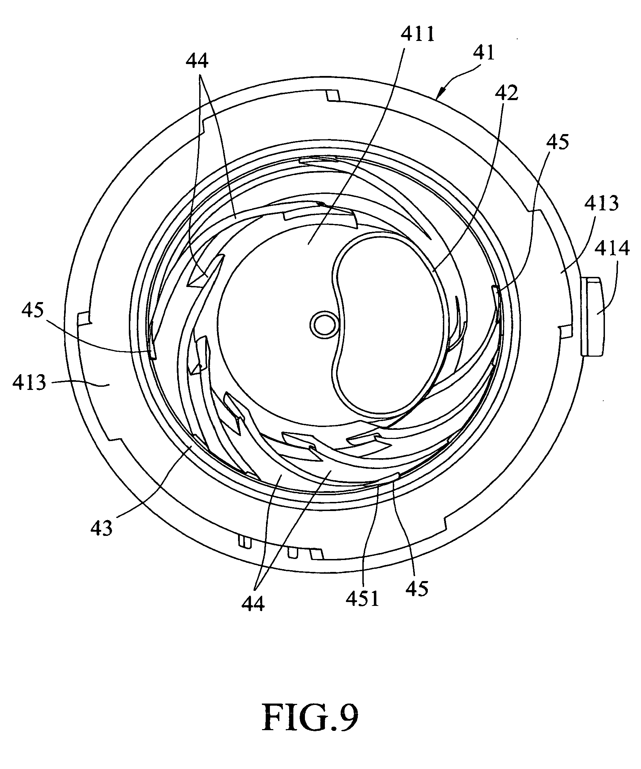

Figs. 3 and 6, in combination with Figs. 1, 2, 4, 5and 7 to 11, illustrate the preferred embodiment of a food processor for cutting and squeezing food according to the present invention. The food processor includes a base seat 3, a housing 4, a driving unit 32, a filter 6, and a rotary processing body 7.

The base seat 3 has a shell wall 31, a top plate 37, a cylindrical projection 36 that protrudes from the top plate 37, and a vertical mounting wall 311 which extends upwardly from the top plate 37 and which is formed with an engaging recess 312.

The driving unit 32 is mounted to the base seat 3, and is disposed in the shell wall 31. In this embodiment, the driving unit 3 is a motor having an output shaft 321 that extends upwardly and outwardly through a top end of the cylindrical projection 36 and that defines a rotation axis (X).

The housing 4 defines an accommodating space 101 therein, and includes a hollow middle seat 30 and a top cover 41 that is seated on and that cooperates with the middle seat 30 to define the accommodating space 101.

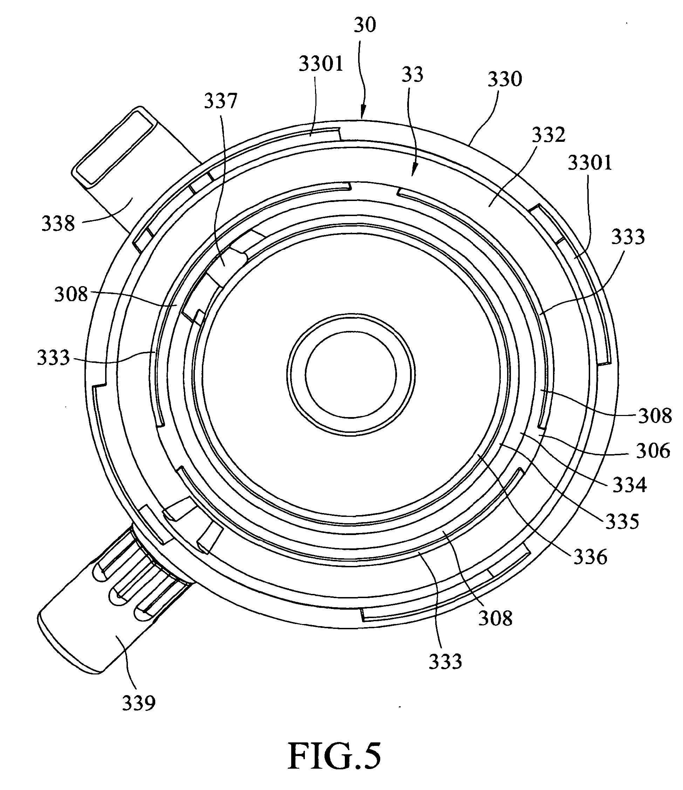

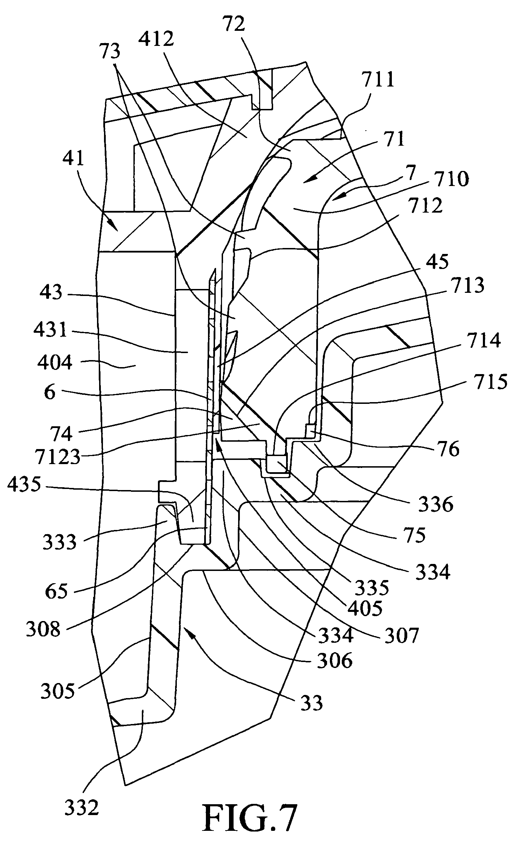

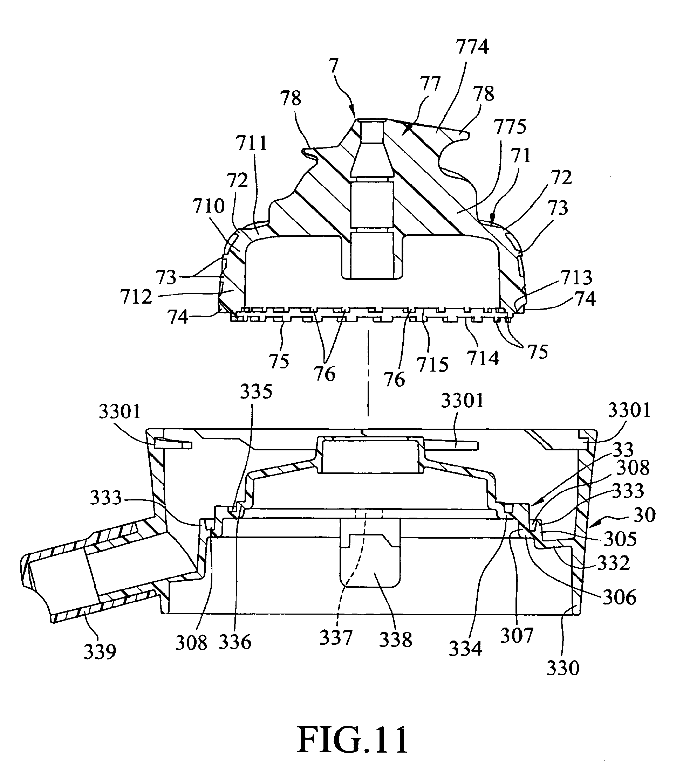

The middle seat 30 is seated on the top plate 37, and has an outer surrounding wall 330, a fluid discharging tube 339, a residue discharging tube 338, an annular central wall 301, an inner tubular wall 302, an annular stepped wall 33, and a top end that is formed with a plurality of retaining grooves 3301. The fluid discharging tube 339 extends outwardly from the outer surrounding wall 330. The inner tubular wall 302 is coaxially surrounded by the outer surrounding wall 330, and extends between and interconnects the annular stepped wall 33 and the annular central wall 301. Referring to Figs. 7 and 11, the annular stepped wall 33 extends between and interconnects the outer surrounding wall 330 and the inner tubular wall 302, and has a first step portion 332, a first riser portion 305 that extends upwardly from the first step portion 332, and a second step portion 334 that is disposed above the first step portion 332 and that is disposed between the first step portion 332 and the rotation axis (X) . The annular stepped wall 33 further has a middle step portion 306 that radiates from the first riser portion 305 and that is disposed between the first and second step portions 332, 334, a second riser portion 307 that extends between the middle step portion 306 and the second step portion 334, and a plurality of restricting protrusions 333 that are angularly displaced from one another and that extend upwardly from a top end of the first riser portion 305. The restricting protrusions 333 cooperate with the middle step portion 306 and the second riser portion 307 to define a plurality restricting grooves 308, respectively. A residue outlet hole 337 is formed in the second step portion 334 of the annular stepped wall 33 (see Fig. 5) . The residue discharging tube 338 is connected to a periphery of the residue outlet hole 337, is in fluid communication with the residue outlet hole 337, and extends outwardly therefrom through the outer surrounding wall 330.

The top cover 41 covers a top opening of the middle seat 30, and has a top wall 411, a cylindrical wall 410 that extends downwardly from the top wall 411, a skirt wall 412 that flares downwardly from a bottom end 4102 of the cylindrical wall 410 into the middle seat 30, a lower annular frame 43 that extends downwardly from the skirt wall 412 into the middle seat 30 and that defines a plurality of openings 431, an annular upper flange wall 422 that radiates outwardly from an upper end of the skirt wall 412 and that has a peripheral end which is formed with an engaging tongue 414, and an annular lower flange wall 423 that radiates outwardly from a lower end of the skirt wall 412 and that has a peripheral end which is formed with a plurality of protrusions 413. An inlet tube 42 extends upwardly from the top wall 411. The engaging tongue 414 engages detachably the engaging recess 312. The protrusions 413 engage the retaining grooves 3301, respectively. The lower annular frame 43 has a lower portion 435 extending into the restricting grooves 308 (see Fig. 7) . The annular filter 6 is detachably attached to an inner side of the lower annular frame 43, and has a lower portion 65 extending into the restricting grooves 308. The outer surrounding wall 330 surrounds and cooperates with the annular filter 6 and the annular stepped wall 33 to define a fluid channel 404 that is in fluid communication with the fluid discharging tube 339. The first step portion 332 cooperates with the first riser portion 305 and the outer surrounding wall 330 to define a lower section of the fluid channel 404, and is inclined gradually and downwardly from one end thereof to the other end that is disposed adjacent to the fluid discharging tube 339.

The rotary processing body 7 is a single piece, is supported rotatably in the accommodating space 101, is rotatable relative to the housing 4 about the rotation axis (X), and has a conical upper part 77 and a lower part 71 that extends from and that is coaxially disposed below the conical upper part 77. The conical upper part 77 has top and bottom ends 774, 775 and an axis that overlaps the rotation axis (X), cooperates with the top wall 411 and the cylindrical wall 410 to define a grinding space 401 thereamong, and is formed with a plurality of blades 78 protruding therefrom into the grinding space 401 for grinding food passing through the grinding space 401. The lower part 71 has an annular radial wall 711 and an upright surrounding wall 712. The annular radial wall 711 radiates outwardly from the bottom end 775 of the conical upper part 77 toward the top cover 41 of the housing 4, and cooperates with the skirt wall 412 to define a processing clearance 403 therebetween. The upright surrounding wall 712 extends downwardly from the annular radial wall 711, is coaxially surrounded by the lower annular frame 43, and cooperates with the annular radial wall 711 to define an annular corner 710 therebetween. The processing clearance 403 has top and bottom ends, flares downwardly from a lower end of the grinding space 401, and when viewed in a cross-section, is tapered from the top end to the bottom end of the processing clearance 403. The driving unit 32 is connected to the conical upper part 77 of the rotary processing body 7 for driving rotation of the rotary processing body 7 about the rotation axis (X). The blades 78 extend helically around the rotation axis (X) from the top end 774 to the bottom end 775 of the conical upper part 77.

The annular filter 6 is disposed between the lower annular frame 43 and the upright surrounding wall 712, and cooperates with the upright surrounding wall 712 to define a processing gap 405 therebetween. The annular filter 6 is formed with apertures 61 so as to permit fluid communication between the processing gap 405 and the fluid channel 404 via the apertures 61. The residue outlet hole 337 is in fluid communication with the processing gap 405.

The annular radial wall 711 is formed with a plurality of spaced apart first processing ribs 72 that protrude therefrom into the processing clearance 403, that are angularly displaced from one another, and that extend curvedly from the lower end 775 of the conical upper part 77 to the annular corner 710. The upright surrounding wall 712 is formed with a plurality of spaced apart second processing ribs 73 that protrude therefrom into the processing gap 405, that are angularly displaced from one another, and that extend downwardly and inclinedly relative to the rotation axis (X) from the first processing ribs 72, respectively, to a lower end portion of the upright surrounding wall 712.

In this embodiment, the top cover 41 surrounds the conical upper part 77 and the lower part 71, and is formed with a plurality of processing fins 44 protruding therefrom into the grinding space 401 and the processing clearance 403 so as to cooperate with the blades 78 and the first processing ribs 72 to grind and squeeze food passing through the grinding space 401 and the processing clearance 403. The processing fins 44 extend downwardly and inclinedly relative to the rotation axis (X) from a top end 4101 of the cylindrical wall 410 to a lower end 4121 of the skirt wall 412.

The processing gap 405 has top and bottom ends, and when viewed in a cross-section, is tapered from the top end to the bottom end of the processing gap 405. The top cover 41 is further formed with a plurality of guiding plates 45 that are angularly displaced from one another. Each of the guiding plates 45 extends downwardly from a lower end of a respective one of the processing fins 44 into the processing gap 405, is disposed between the annular filter 6 and the upright surrounding wall 712, and has an inclined side 451 that extends downwardly and inclinedly relative to the rotation axis (X) from the lower end of the respective one of the processing fins 44 for guiding residue of the food entering the processing gap 405.

In this embodiment, the upright surrounding wall 712 has a bottom end portion 7123 that has an annular inclined face 713 which is inclined relative to the rotation axis (X) and which faces toward the annular filter 6 and the second step portion 334. The bottom end portion 7123 of the upright surrounding wall 712 is formed with a plurality of residue-pushing tabs 74 that protrude downwardly from the annular inclined face 713 toward the annular filter 6 and the second step portion 334 and that are angularly displaced from one another.

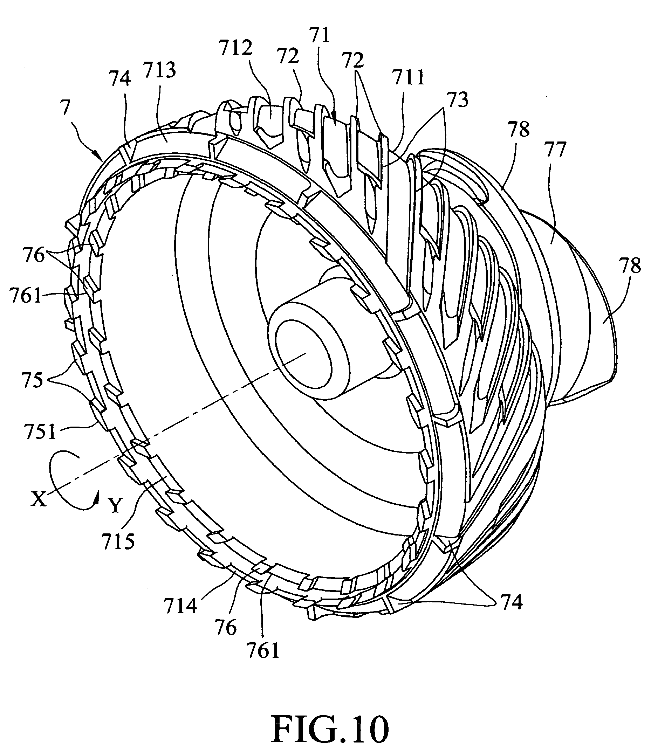

The second step portion 334 is formed with an annular residue-guiding trough 335 indented downwardly therefrom and in fluid communication with the residue outlet hole 337. The bottom end portion 7123 of the upright surrounding wall 712 further has an annular middle face 714 that is disposed below and inwardly of the annular inclined face 713, that extends in a radial direction relative to the rotation axis (X), and that faces toward the residue-guiding trough 335, and is further formed with a plurality of first teeth 75 that are angularly displaced from one another and that extend downward from the annular middle face 714 into the residue-guiding trough 335. Each of the first teeth 75 has an inclined side 751 that extends outwardly and inclinedly relative to the radial direction in a backward direction against a rotational direction (Y) of the rotary processing body 7 (see Fig. 10).

The annular stepped wall 33 further has a third step portion 336 that is disposed above the second step portion 334 and between the second step portion 334 and the rotation axis (X). The bottom end portion 7123 of the upright surrounding wall 712 further has an annular inner face 715 that is disposed above and inwardly of the annular middle face 714 and that extends in the radial direction, and is further formed with a plurality of second teeth 76 that are angularly displaced from one another and that extend downward from the annular inner face 715 toward the third step portion 336. Each of the second teeth 76 has an inclined side 761 that extends outwardly and inclinedly relative to the radial direction in the backward direction against the rotational direction (Y) of the rotary processing body 7.

In operation, the rotary processing body 7 is rotated in the rotational direction (Y) by the driving unit 32 and food is fed into the grinding space 401 through the inlet tube 42. Upon rotation, the blades 78 cooperate with the processing fins 44 to cut the food into small pieces, to squeeze juice from the food and to guide the pieces of the food and the juice to slide into the processing clearance 403. The pieces of the food in the processing clearance 403 are subsequently squeezed and crushed and are guided together with the juice into the processing gap 405 by the processing fins 44 and the first processing ribs 72 that cooperate with the processing fins 44 to perform the cutting and squeezing. Since the processing gap 405 is tapered downwardly when viewed in a cross section, the second processing ribs 73 cooperate with the annular filter 6 to further squeeze and crush the pieces of the food to reduce the sizes of the pieces of the food in the processing gap 405 and to extract more juice out of the same. The squeezed juice is accumulated in the processing gap 405, and is caused to flow through the apertures 61 in the annular filter 6 into the fluid channel 404 and then into the fluid discharging tube 339, thereby separating the squeezed juice from the pieces of the food in the processing gap 405. The inclined sides 451 of the guiding plates 45 cooperate with the second processing ribs 73 to guide the pieces of the food, which become residue, in the processing gap 405 to fall downwardly, such that residue is accumulated both on the second step portion 334 of the annular stepped wall 33 and in the residue-guiding trough 335. Driven by the rotation of the rotary processing body 7, the residue-pushing tabs 74 sweep the residue on the second step portion 334 into the residue outlet hole 337 and the inclined sides 751 of the first teeth 75 sweep the residue in the residue-guiding trough 335 into the residue outlet hole 337, thereby permitting discharging of the residue into and through the residue discharging tube 338. In addition, the third step portion 336 of the annular stepped wall 33, which has a height greater than that of the second step portion 334, prevents the residue from moving into an inner space 701 defined by an inner surface of the rotary processing body 7, the annular central wall 301 and the inner tubular wall 302. The inclined side 761 of the second teeth 76 push the residue that moves upwardly from the residue-guiding trough 335 toward the third step portion 336 back into the residue-guiding trough 335.

In this embodiment, each of the first and second processing ribs 72, 73 has a strip shape. Alternatively, each of the first and second processing ribs 72, 73 can have a bar or block shape.

With the inclusion of the rotary processing body 7 and the processing fins 44 in the food processor of the present invention, food can be cut and squeezed into tiny pieces to extract juice.

## Claims

1. A rotary processing body (7) for a food processor, including:
a conical upper part (77) having a bottom end (775); and
a lower part (71) that extends from and that is coaxially disposed below said conical upper part (77), said conical upper part being formed with a blade protruding therefrom, said lower part (71) having an annular radial wall (711) and an upright surrounding wall (712), **characterized in that** said annular radial wall (711) radiates outwardly from said bottom end (775) of said conical upper part (77), and is formed with spaced apart first processing ribs (72) that protrude therefrom, said upright surrounding wall (712) extending downwardly from said outwardly radiating annular radial wall (711), cooperating with said annular radial wall (711) to define an annular corner (710) therebetween, and being formed with spaced apart second processing ribs (73) that protrude therefrom.

2. The rotary processing body (7) of claim 1, **characterized in that** said conical upper part (77) has top and bottom ends (774, 775), said blade (78) extending helically around an axis of said conical upper part (77) from said top end (774) to said bottom end (775) of said conical upper part (77).

3. The rotary processing body (7) of any one of claims 1 and 2, **characterized in that** said upright surrounding wall (712) has a bottom end portion (7123) that has an annular inclined face (713) which is inclined relative to the axis of said conical upper part (77), and that is formed with a plurality of residue-pushing tabs (74) that protrude downwardly from said annular inclined face (713) and that are angularly displaced from one another.

4. The rotary processing body (7) of claim 3, **characterized in that** said bottom end portion (7123) of said upright surrounding wall (712) further has an annular middle face (714) that is disposed below and inwardly of said annular inclined face (713) and that extends in a radial direction relative to the axis of said upper conical part (77), and is further formed with a plurality of first teeth (75) that are angularly displaced from one another and that extend downward from said annular middle face (714), each of said first teeth having an inclined side that is inclined to the radial direction.

5. The rotary processing body (7) of claim 4, **characterized in that** said bottom end portion (7123) further has an annular inner face (715) that is disposed above and inwardly of said annular middle face (714) and that extends in the radial direction, and is further formed with a plurality of second teeth (76) that are angularly displaced from one another and that extend downward from said annular inner face (715), each of said second teeth having an inclined side (761) that is inclined to the radial direction.

6. A food processor including:
a housing (4) defining an accommodating space (101) therein;
a rotary processing body (7) supported rotatably in said accommodating space (101), rotatable relative to said housing (4) about a rotation axis (X), and having a conical upper part (77) and a lower part (71), said conical upper part (77) having a bottom end (775), cooperating with said housing (4) to define a grinding space (401) therebetween, and being formed with a blade (78) protruding from said conical upper part (77) into said grinding space (401), said lower part (71) having an annular radial wall (711) and an upright surrounding wall (712), **characterized in that** said annular radial wall (711) radiates outwardly from said bottom end (775) of said conical upper part (77) toward said housing (4), cooperates with said housing (4) to define a processing clearance (403) therebetween, and is formed with spaced apart first processing ribs (72) that protrude therefrom into said processing clearance (403), said upright surrounding wall (712) extending downwardly from said outwardly radiating annular radial wall (711) and cooperating with said annular radial wall (711) to define an annular corner (710) therebetween; the food processor further including:
an annular filter (6) disposed between said housing (4) and said upright surrounding wall (712) and cooperating with said upright surrounding wall (712) to define a processing gap (405) therebetween;
wherein said upright surrounding wall (712) is formed with spaced apart second processing ribs (73) that protrude therefrom into said processing gap (405).

7. The food processor of claim 6, **characterized in that** said housing (4) includes a hollow middle seat (30) and a top cover (41) that is seated on said hollow middle seat (30) and that cooperates with said middle seat (30) to define said accommodating space (101), that surrounds said conical upper part (77) and said lower part (71), that cooperates with said annular radial wall (711) to define said processing clearance (403), and that is formed with a plurality of processing fins (44) protruding therefrom into said grinding space (401) and said processing clearance (403) so as to cooperate with said blade (78) and said first processing ribs (72) to grind and squeeze food passing through the grinding space (401) and the processing clearance (403).

8. The food processor of any one of claims 6 to 7, **characterized in that** said conical upper part (77) has top and bottom ends (774, 775), said blade (78) extending helically around the rotation axis (X) from said top end (774) to said bottom end (775) of said conical upper part (77).

9. The food processor of claim 7, **characterized in that** comprising an inlet tube (42), said top cover (41) having a top wall (411), a cylindrical wall (410) that extends downwardly from said top wall (411), and a skirt wall (412) that flares downwardly from said cylindrical wall (410), said inlet tube (42) extending upwardly from said top wall (411), said cylindrical wall (410) cooperating with said top wall (411) and said conical upper part (77) to define said grinding space (401), said skirt wall (412) cooperating with said annular radial wall (711) to define said processing clearance (403), said processing clearance (403) having top and bottom ends, flaring downwardly from a lower end of said grinding space (401), and being tapered from said top end to said bottom end of said processing clearance (403) when viewed in a cross-section, said processing fins (44) extending downwardly and inclinedly relative to the rotation axis (X) from a top end (4101) of said cylindrical wall (410) to a lower end (4121) of said skirt wall (412).

10. The food processor of claim 9, **characterized in that** said first processing ribs (72) extend curvedly, said second processing ribs (73) extending downwardly and inclinedly relative to the rotation axis (X) from said first processing ribs (72), respectively.

11. The food processor of claim 10, **characterized in that** said top cover (41) further has a lower annular frame (43) that extends downwardly from said skirt wall (412), that surrounds coaxially said upright surrounding wall (712) of said lower part (71), and that defines a plurality of openings (431), said annular filter (6) being disposed between said lower annular frame (43) and said upright surrounding wall (712) and being attached to said lower annular frame (43).

12. The food processor of claim 11, **characterized in that** said processing gap (405) has top and bottom ends, and when viewed in a cross-section, is tapered from said top end to said bottom end of said processing gap (405), said top cover (41) being further formed with a plurality of guiding plates (45) that are angularly displaced from one another, each of said guiding plates (45) extending downwardly from a lower end of a respective one of said processing fins (44) into said processing gap (405), being disposed between said annular filter (6) and said upright surrounding wall (712), and having an inclined side (451) that extends downwardly and inclinedly relative to the rotation axis (X) from said lower end of the respective one of said processing fins (44) for guiding residue of the food entering said processing gap (405).

13. The food processor of claim 11, **characterized in that** comprising a driving unit (32) and a base seat (3) that has a top plate (37) and a vertical mounting wall (311) which extends upwardly from said top plate (37) and which is formed with an engaging recess (312), said driving unit (32) being mounted to said base seat (3), said middle seat (30) being seated on said top plate (37), said top cover (41) further having an annular upper flange wall (422) that radiates outwardly from said skirt wall (412) and that has a peripheral end (4221), said peripheral end (4221) of said annular flange wall (422) being formed with an engaging tongue (414) that engages detachably said engaging recess (312).

14. The food processor of claim 13, **characterized in that** said hollow middle seat (30) has an outer surrounding wall (330), a fluid discharging tube (339) that extends outwardly from said outer surrounding wall (330), an inner tubular wall (302) that is surrounded by said outer surrounding wall (330), and an annular stepped wall (33) that extends between said outer surrounding wall (330) and said inner tubular wall (302), said outer surrounding wall (330) surrounding and cooperating with said annular filter (6) and said annular stepped wall (33) to define a fluid channel (404) therebetween, said fluid discharging tube (339) being in fluid communication with said fluid channel (404), said annular filter (6) being disposed between said fluid channel (404) and said processing gap (405) and permitting fluid communication between said processing gap (405) and said fluid channel (404), said annular stepped wall (33) being formed with a residue outlet hole (337) that is in fluid communication with said processing gap (405).

15. The food processor of claim 14, **characterized in that** said annular stepped wall (33) has a first step portion (332), a first riser portion (305) that extends upwardly from said first step portion (332), and a second step portion (334) that is disposed above said first step portion (332) and that is disposed between said first step portion (332) and the rotation axis (X), said residue outlet hole (337) being formed in said second step portion (334), said first step portion (332) cooperating with said first riser portion (305) and said outer surrounding wall (330) to define a lower section of said fluid channel (404).

16. The food processor of claim 15, **characterized in that** said annular stepped wall (33) further has a middle step portion (306) that radiates from said first riser portion (305) and that is disposed between said first and second step portions (332, 334), a second riser portion (307) that extends between said middle step portion (306) and said second step portion (334), and a plurality of restricting protrusions (333) that are angularly displaced from one another and that extend upwardly from a top end of said first riser portion (305), said restricting protrusions (333) cooperating with said middle step portion (306) and said second riser portion (307) to define a plurality restricting grooves (308), respectively, said lower annular frame (43) having a lower portion (435) extending into said restricting grooves (308), said upright surrounding wall (712) having a bottom end portion (7123) that has an annular inclined face (713) which is inclined relative to the rotation axis (X) and which faces toward said annular filter (6) and said second step portion (334), said bottom end portion (7123) of said upright surrounding wall (712) being formed with a plurality of residue-pushing tabs (74) that protrude downwardly from said annular inclined face (713) toward said annular filter (6) and said second step portion (334) and that are angularly displaced from one another.

17. The food processor of claim 16, **characterized in that** said second step portion (334) is formed with an annular residue-guiding trough (335) indented downwardly therefrom, said bottom end portion (7123) of said upright surrounding wall (712) further having an annular middle face (714) that is disposed below and inwardly of said annular inclined face (713), that extends in a radial direction relative to the rotation axis (X), and that faces toward said residue-guiding trough (335), and being further formed with a plurality of first teeth (75) that are angularly displaced from one another and that extend downward from said annular middle face (714) into said residue-guiding trough (335), each of said first teeth (75) having an inclined side (751) that is inclined to the radial direction relative to the rotation axis (X).

18. The food processor of claim 17, **characterized in that** said annular stepped wall (33) further has a third step portion (336) that is disposed above said second step portion (334) and between said second step portion (334) and the rotation axis (X), said bottom end portion (7123) of said upright surrounding wall (712) further having an annular inner face (715) that is disposed above and inwardly of said annular middle face (714) and that extends in the radial direction, and being further formed with a plurality of second teeth (76) that are angularly displaced from one another and that extend downward from said annular inner face (715) toward said third step portion (336), each of said second teeth (76) having an inclined side (761) that is inclined to the radial direction.

## Patentansprüche

1. Rotierender Verarbeitungskörper (7) für einen Lebensmittelverarbeiter mit einem konischen oberen Teil (77), der ein unteres Ende (775) hat, und einem unteren Teil (71), der sich von dem konischen oberen Teil (77) aus erstreckt und koaxial darunter angeordnet ist, wobei der konische obere Teil mit einer von ihm abstehenden Schaufel versehen ist, und der untere Teil (71) eine ringförmige, radiale Wand (711) aufweist sowie eine aufrechte umgebende Wand (712), **dadurch gekennzeichnet, daß** die ringförmige, radiale Wand (711) von dem unteren Ende (775) des konischen oberen Teil (77) radial nach außen ragt und mit mit Abstand nebeneinander liegenden ersten Verarbeitungsrippen (72) versehen ist, die von ihr abstehen, wobei die aufrechte umgebende Wand (712) von der nach außen ragenden ringförmigen radiale Wand (711) nach unten ragt, um mit der ringförmigen radialen Wand (711) zusammenzuwirken und dadurch zwischen ihnen eine ringförmige Ecke (710) zu bilden, und wobei sie mit mit Abstand nebeneinanderliegenden zweiten Verarbeitungsrippen (73) versehen ist, die von ihr abstehen.

2. Rotierender Verarbeitungskörper (7) nach Anspruch 1, **dadurch gekennzeichnet, daß** der konische obere Teil (77) kopfseitige und bodenseitige Enden (774, 775) aufweist, und daß sich die Schaufel (78) schraubenförmig rund um eine Achse des konischen oberen Teil (77) von dem kopfseitigen Ende (774) aus zu dem unteren Ende (775) des konischen oberen Teils (77) erstreckt.

3. Rotierender Verarbeitungskörper (7) nach einem der Ansprüche 1 und 2, **dadurch gekennzeichnet, daß** die aufrechte umgebende Wand (712) einen unteren Endteil (7123) aufweist, der eine ringförmige, geneigte Fläche (713) hat, die in Bezug auf die Achse des konischen oberen Teils (77) geneigt ist, und daß sie mit mehreren Restschubnasen (74) ausgestattet ist, die von der ringförmigen, geneigten Fläche (713) nach unten vorstehen und die voneinander winklig versetzt sind.

4. Rotierender Verarbeitungskörper (7) nach Anspruch 3, **dadurch gekennzeichnet, daß** der untere Endteil (7123) der aufrechten umgebenden Wand (712) des weiteren eine ringförmige mittlere Fläche (714) aufweist, die unterhalb und innerhalb der ringförmigen geneigten Fläche (713) liegt und die sich in radialer Richtung in Bezug auf die Achse des oberen konischen Teils (77) erstreckt und des weiteren mit mehreren ersten Zähnen (75) ausgestattet ist, welche voneinander im Winkel versetzt sind und sich von der ringförmigen, mittleren Fläche (714) aus abwärts erstrecken, wobei jeder dieser ersten Zähne eine schräge Seite hat, die zu der radialen Richtung geneigt ist.

5. Rotierender Verarbeitungskörper (7) nach Anspruch 4, **dadurch gekennzeichnet, daß** der untere Endteil (7123) des weiteren eine ringförmige innere Fläche (715) hat, die über und innerhalb der ringförmigen mittleren Fläche (714) angeordnet ist und sich in radialer Richtung erstreckt und daß er des weiteren mit mehreren zweiten Zähnen (76) ausgestattet ist, welche voneinander im Winkel versetzt sind und sich von der ringförmigen inneren Fläche (715) abwärts erstrecken, wobei jeder dieser zweiten Zähne eine geneigte Seite (761) aufweist, die zur radialen Richtung schräg verläuft.

6. Lebensmittelverarbeiter mit einem Gehäuse (4), das einen Aufnahmeraum (101) begrenzt, ferner mit einem rotierenden Verarbeitungskörper (7), der in dem Aufnahmeraum (107) drehbar getragen wird, in Bezug auf das Gehäuse (4) um eine Drehachse (X) drehbar ist und einen konischen oberen Teil (77) sowie einen unteren Teil (71) aufweist, wobei der konische obere Teil (77) mit einem unteren Ende (775) versehen ist, das mit dem Gehäuse (4) zusammenwirkt, um dazwischen einen Mahlraum (401) zu bilden, und das mit einer Schaufel (78) ausgestattet ist, die von dem konischen oberen Teil (77) absteht und in den Mahlraum (401) ragt, wobei der untere Teil (71) eine ringförmige radiale Wand (711) sowie eine aufrechte umgebende Wand (712) aufweist, **dadurch gekennzeichnet, daß** die ringförmige radiale Wand (711) von dem unteren Teil (775) des konischen oberen Teils (77) in Richtung auf das Gehäuse (4) nach außen läuft, mit dem Gehäuse (4) so zusammenarbeitet, daß ein Verarbeitungsspalt (403) zwischen ihnen gebildet wird, und mit mit Abstand nebeneinanderliegenden ersten Verarbeitungsrippen (72) versehen ist, die von dort in den Verarbeitungsspalt (403) ragen, daß die aufrechte umgebende Wand (712) sich von der nach außen in radialer Richtung erstreckenden, ringförmigen radialen Wand (712) gerichtet ist und mit der ringförmigen radialen Wand (711) zusammenwirkt, um dadurch eine ringförmige Ecke (710) zwischen ihnen zu bilden; wobei des weiteren der Nahrungsmittelverarbeiter noch folgende Teile aufweist: einen ringförmigen Filter (6), der zwischen dem Gehäuse (4) und der aufrechten umgebenden Wand (712) angeordnet ist und mit der aufrechten umgebenden Wand (712) zusammenwirkt, um einen Verarbeitungsspalt (405) zwischen ihnen zu bilden, wobei die aufrechte umgebende Wand (712) mit mit Abstand nebeneinanderliegenden zweiten Verarbeitungsrippen (73) ausgestattet ist, die von dort in den Verarbeitungsspalt (405) hineinragen.

7. Lebensmittelverarbeiter nach Anspruch 6, **dadurch gekennzeichnet, daß** das Gehäuse (4) einen hohlen mittleren Sitz (30) und einen kopfseitigen Deckel (41) aufweist, der auf dem hohlen mittleren Sitz (30) angeordnet ist und mit dem mittleren Sitz (30) so zusammenwirkt, daß ein Aufnahmeraum (101) gebildet wird, der den konischen oberen Teil (77) und den unteren Teil (71) umgibt und mit der ringförmigen radialen Wand (711) zusammenwirkt, um einen Verarbeitungsspalt (403) zu bilden, und daß er mit mehreren Verarbeitungsrippen (44) versehen ist, die von ihm in den Mahlraum (401) und den Verarbeitungsspalt (403) hineinragen, um mit der Schaufel (78) zusammenzuwirken sowie mit den ersten Verarbeitungsrippen (72) und dadurch das Nahrungsmittel zu mahlen und zu quetschen, das durch den Mahlraum (401) und den Verarbeitungsspalt (403) läuft.

8. Lebensmittelverarbeiter nach einem der Ansprüche 6 bis 7, **dadurch gekennzeichnet, daß** der konische obere Teil (77) kopfseitige und untere Enden (774, 775) aufweist, und daß die Schaufel (78) sich schraubenförmig rund um die Drehachse (X) von dem kopfseitigen bzw. oberen Ende (774) aus zu dem unteren Ende (775) des konischen oberen Teil (77) erstreckt.

9. Lebensmittelverarbeiter nach Anspruch 7, **dadurch gekennzeichnet, daß** er ein Eintrittsrohr (42) aufweist, daß der obere Deckel (41) mit einer oberen Wand (411) versehen ist sowie einer zylindrischen Wand (410), die sich von der oberen Wand (411) aus nach unten erstreckt, und einer Randwand (412), die von der zylindrischen Wand (410) abwärts läuft, wobei das Eintrittsrohr (42) sich von der oberen Wand (411) abwärts erstreckt, die zylindrische Wand (410) mit der oberen Wand (411) und dem konischen oberen Teil (77) zusammenwirkt, um dadurch den Mahlraum (401) zu bilden, wobei des weiteren die Randwand (412) mit der ringförmigen radialen Wand (711) zusammenwirkt, um den Verarbeitungsspalt (403) zu bilden, der mit oberen und unteren Enden ausgestattet ist, welche sich von einem unteren Ende des Mahlraums (401) abwärts erstrecken und die von dem oberen Ende des unteren Endes des Verarbeitungsspaltes (403) aus abgeschrägt sind, und zwar gesehen im Querschnitt, wobei die Verarbeitungsrippen (44) sich in Bezug auf die Drehachse (X) von einem oberen Ende (4101) der zylindrischen Wand (410) zu einem unteren Ende (4121) der Randwand (412) nach unten und geneigt erstrecken.

10. Lebensmittelverarbeiter nach Anspruch 9, **dadurch gekennzeichnet, daß** die ersten Verarbeitungsrippen (72) sich gekrümmt erstrecken, und die zweiten Verarbeitungsrippen (73) sich nach unten und in Bezug auf die Drehachse (X) von den ersten Verarbeitungsrippen (72) entsprechend geneigt erstrecken.

11. Lebensmittelverarbeiter nach Anspruch 10, **dadurch gekennzeichnet, daß** der obere Deckel (41) des weiteren einen unteren ringförmigen Rahmen (43) aufweist, der sich von der Randwand (412) aus abwärts erstreckt, die die aufrechte umgebende Wand (712) des unteren Teils (71) koaxial umgibt, und daß mehrere Öffnungen (431) gebildet werden, wobei der ringförmige Filter (6) zwischen dem unteren ringförmigen Rahmen (43) und der aufrechten umgebenden Wand (712) angeordnet ist und an dem unteren ringförmigen Rahmen (43) angebracht ist.

12. Lebensmittelverarbeiter nach Anspruch 11, **dadurch gekennzeichnet, daß** der Verarbeitungsspalt (405) obere und untere Enden aufweist und, gesehen im Querschnitt, von dem oberen Ende zu dem unteren Ende des Verarbeitungsspaltes (405) abgeschrägt ist, daß der obere Deckel (41) des weiteren mit mehreren Führungsplatten (45) versehen ist, die winklig voneinander versetzt sind, wobei jede dieser Führungsplatten (45) sich von einem unteren Ende der entsprechenden Rippe der Verarbeitungsrippen abwärts in den Verarbeitungsspalt (405) hinein erstrecken, der zwischen dem ringförmigen Filter (6) und der aufrechten umgebenden Wand (712) angeordnet ist und eine geneigte Seite (451) aufweist, welche sich abwärts erstreckt und in Bezug auf die Drehachse (X) von dem unteren Ende der entsprechenden Rippe der Verarbeitungsrippen (44) geneigt verläuft, um den Rest des Lebensmittels, das in den Verarbeitungsspalt (405) eintritt, zu führen.

13. Lebensmittelverarbeiter nach Anspruch 11, **dadurch gekennzeichnet, daß** er eine Antriebseinheit (32) und einen Basissitz (3) aufweist, der mit einer Kopfplatte (37) und einer senkrechten Umfangswand (311) versehen ist, die sich von der Kopfplatte (37) aus nach oben erstreckt und die mit einer Eingriffsaussparung (312) versehen ist, wobei die Antriebseinheit (32) an dem Basissitz (3) angebracht ist, der mittlere Sitz (30) auf der Kopfplatte (37) sitzt, der obere Deckel (41) des weiteren mit einer ringförmigen oberen Flanschwand (422) versehen ist, die sich von der oberen Randwand (412) radial nach auβen erstreckt, und daß ein Umfangsende (4221) der ringförmigen Flanschwand (422) vorhanden ist, das mit einer Eingriffszunge (414) versehen ist, die mit der Eingriffsaussparung (312) in entfernbarem Eingriff steht.

14. Lebensmittelverarbeiter nach Anspruch 13, **dadurch gekennzeichnet, daß** der hohle mittlere Sitz (30) eine äußere Umfangswand (330) und ein Fluidaustragsrohr (339) aufweist, das sich von der äußeren Umfangswand (330) nach außen erstreckt, des weiteren eine innere rohrförmige Wand (302), die von der äußeren Umfangswand (330) umgeben ist, und eine ringförmige gestufte Wand (33), die sich zwischen der äußeren Umfangswand (330) und der inneren rohrförmigen Wand (302) erstreckt, daß des weiteren die äußere Umfangswand (330) das ringförmige Filter (6) umgibt und mit ihm zusammenwirkt sowie mit der ringförmigen gestuften Wand (33), um zwischen ihnen einen Fluidkanal (404) zu bilden, wobei das Fluidaustragsrohr (339) mit dem Fluidkanal (404) in Strömungsverbindung steht, daß des weiteren das ringförmige Filter (6) zwischen dem Fluidkanal (404) und dem Verarbeitungsspalt (405) angeordnet ist und die Herstellung einer Strömungsverbindung zwischen dem Verarbeitungsspalt (405) und dem Fluidkanal (404) ermöglicht, wobei die ringförmige, gestufte Wand (33) mit einer Restauslaßbohrung (337) versehen ist, die mit dem Verarbeitungsspalt (405) in Strömungsverbindung steht.

15. Lebensmittelverarbeiter nach Anspruch 14, **dadurch gekennzeichnet, daß** die ringförmige, gestufte Wand (33) einen ersten Stufenteil (332), einen ersten Steigteil (305), der sich von dem ersten Stufenteil (332) nach oben erstreckt, und einen zweiten Stufenteil (334) aufweist, der über dem ersten Stufenteil (332) angeordnet ist und zwischen dem ersten Stufenteil (332) und der Drehachse (X) versetzt ist, und daß das Restaustrittsbohrung (337) in dem zweiten Stufenteil (334) ausgebildet ist, wobei der erste Stufenteil (332) mit dem ersten Steigteil (305) und der äußeren Umgebungswand (330) zusammenwirkt, um einen unteren Abschnitt des Fluidkanals (404) zu bilden.

16. Lebensmittelverarbeiter nach Anspruch 15, **dadurch gekennzeichnet, daß** die ringförmige gestufte Wand (33) des weiteren einen mittleren Stufenteil (306) aufweist, der von dem ersten Steigteil (305) sich radial erstreckt und der zwischen dem ersten und dem zweiten Stufenteil (332, 334) angeordnet ist, daß des weiteren ein zweiter Steigteil (307) vorhanden ist, der sich zwischen dem mittleren Stufenteil (306) und dem zweiten Stufenteil (334) erstreckt, sowie mehrere verengende Vorsprünge (333), die voneinander winklig versetzt sind und sich von einem oberen Ende des ersten Steigteils (305) nach oben erstrecken, wobei die verengenden Vorsprünge (333) mit dem mittleren Stufenteil (306) und dem zweiten Steigteil (307) zusammenwirken, um entsprechend mehrere verengende Nuten (308) zu bilden, wobei des weiteren der untere ringförmige Rahmen (43) einen unteren Teil (435) aufweist, der sich in die verengenden Nuten (308) hinein erstreckt, und die aufrechte umgebende Wand (712) einen unteren Endteil (7123) hat, der mit einer ringförmigen, geneigten Fläche (713) versehen ist, welche in Bezug auf die Drehachse (X) schräg verläuft und die gegen das ringförmige Filter (6) und den zweiten gestuften Teil (334) geneigt ist, wobei der untere Endteil (7123) der aufrechten Umgebungswand (712) mit mehreren Restschubnasen (74) versehen ist, die von der ringförmigen, geneigten Fläche (713) aus in Richtung auf das ringförmige Filter (6) und den zweiten Stufenteil (334) nach unten vorstehen und die voneinander winklig versetzt sind.

17. Lebensmittelverarbeiter nach Anspruch 16, **dadurch gekennzeichnet, daß** der zweite Stufenteil (334) mit einer ringförmigen Restführungsrinne (335) versehen ist, die von ihm nach unten eingeschnitten ist, daß der untere Endteil (7123) der aufrechten Umfangswand (712) des weiteren mit einer ringförmigen mittleren Fläche (714) versehen ist, die unter der ringförmigen, geneigten Fläche (713) und innerhalb dieser liegt, welche sich in radialer Richtung in Bezug auf die Drehachse (X) erstreckt, und daß sie in Richtung auf die Restführungsrinne (335) weist und des weiteren mit mehreren ersten Zähnen (75) versehen ist, welche voneinander winklig versetzt sind und sich unterhalb der ringförmigen, mittleren Fläche (714) in die Restführungsrinne (335) erstrecken, wobei jeder dieser ersten Zähne (75) eine schräge Seite (751) aufweist, welche zu der radialen Richtung in Bezug auf die Drehachse (X) geneigt sind.

18. Lebensmittelverarbeiter nach Anspruch 17, **dadurch gekennzeichnet, daß** die ringförmige gestufte Wand (33) des weiteren einen dritten Stufenteil (336) aufweist, der über dem zweiten Stufenteil (334) und zwischen dem zweiten Stufenteil (334) und der Drehachse (X) liegt, daß der untere Endteil (7123) der aufrechten Umfangswand (712) des weiteren mit einer ringförmigen, inneren Fläche (715) versehen ist, die über und innerhalb der ringförmigen, mittleren Fläche (714) liegt und sich in radialer Richtung erstreckt und des weiteren mit mehreren zweiten Zähnen (76) versehen ist, welche voneinander winklig versetzt sind und sich von der ringförmigen, inneren Fläche (715) in Richtung auf den dritten gestuften Teil (336) unten erstrecken, wobei jeder der zweiten Zähne (76) eine schräge Seite (761) aufweist, die in radialer Richtung geneigt ist.

## Revendications

1. Corps de traitement rotatif (7) pour un robot de cuisine, comprenant :
une partie supérieure conique (77) ayant une extrémité inférieure (775) ; et
une partie inférieure (71) qui s'étendant à partir de et qui est disposée de manière coaxiale au-dessous de ladite partie supérieure conique (77), ladite partie supérieure conique étant formée avec une lame faisant saillie de cette dernière, ladite partie inférieure (71) ayant une paroi radiale annulaire (711) et une paroi périphérique droite (712), **caractérisé en ce que** ladite paroi radiale annulaire (711) part vers l'extérieur à partir de ladite extrémité inférieure (775) de ladite partie supérieure conique (77), et est formée avec des premières rainures de traitement espacées (72) qui font saillie de cette dernière, ladite paroi périphérique droite (712) s'étendant vers le bas à partir de ladite paroi radiale annulaire (711) partant vers l'extérieur, coopérant avec ladite paroi radiale annulaire (711) pour définir un coin annulaire (710) entre elles, et étant formée avec des secondes nervures de traitement espacées (73) qui font saillie dé cette dernière.

2. Corps de traitement rotatif (7) selon la revendication 1, **caractérisé en ce que** ladite partie supérieure conique (77) a des extrémités supérieure et inférieure (774, 775), ladite lame (78) s'étendant de manière hélicoïdale autour d'un axe de ladite partie supérieure conique (77) de ladite extrémité supérieure (774) à ladite extrémité inférieure (775) de ladite partie supérieure conique (77).

3. Corps de traitement rotatif (7) selon l'une quelconque des revendications 1 et 2, **caractérisé en ce que** ladite paroi périphérique droite (712) a une partie d'extrémité inférieure (7123) qui a une face inclinée annulaire (713) qui est inclinée par rapport à l'axe de ladite partie supérieure conique (77), et qui est formée avec une pluralité de languettes de poussée de résidus (74) qui font saillie vers le bas à partir de ladite face inclinée annulaire (713) et qui sont déplacées de manière angulaire les unes par rapport aux autres.

4. Corps de traitement rotatif (7) selon la revendication 3, **caractérisé en ce que** ladite partie d'extrémité inférieure (7123) de ladite paroi périphérique droite (712) a en outre, une face centrale annulaire (714) qui est disposée au-dessous et vers l'intérieur de ladite face inclinée annulaire (713) et qui s'étend dans une direction radiale par rapport à l'axe de ladite partie supérieure conique (77) et est en outre formée avec une pluralité de premières dents (75) qui sont déplacées de manière angulaire les unes par rapport aux autres et qui s'étendent vers le bas à partir de ladite face centrale annulaire (714), chacune desdites premières dents ayant un côté incliné qui est incliné dans la direction radiale.

5. Corps de traitement rotatif (7) selon la revendication 4, **caractérisé en ce que** ladite partie d'extrémité inférieure (7123) a une face interne annulaire (715) qui est disposée au-dessus et vers l'intérieur de ladite face centrale annulaire (714) et qui s'étend dans la direction radiale et est formée en outre avec une pluralité de secondes dents (76) qui sont déplacées de manière angulaire les unes par rapport aux autres et qui s'étendent vers le bas à partir de ladite face interne annulaire (715), chacune desdites secondes dents ayant un côté incliné (761) qui est incliné dans la direction radiale.

6. Robot de cuisine comprenant :
un boîtier (4) définissant un espace de logement (101) à l'intérieur de ce dernier ;
un corps de traitement rotatif (7) supporté en rotation dans ledit espace de logement (101), pouvant tourner par rapport audit boîtier (4) autour d'un axe de rotation (X) et ayant une partie supérieure conique (77) et une partie inférieure (71), ladite partie supérieure conique (77) ayant une extrémité inférieure (775) coopérant avec ledit boîtier (4) afin de définir un espace de hachage (401) entre eux, et étant formée avec une lame (78) faisant saillie de ladite partie supérieure conique (77) dans ledit espace de hachage (401), ladite partie inférieure (71) ayant une paroi radiale annulaire (711) et une paroi périphérique droite (712), **caractérisé en ce que** ladite paroi radiale annulaire (711) part vers l'extérieur à partir de ladite extrémité inférieure (775) de ladite partie supérieure conique (77) vers ledit boîtier (4), coopère avec ledit boîtier (4) pour définir un espacement de traitement (403) entre eux, et est formée avec des premières nervures de traitement espacées (72) qui font saillie de cette dernière dans ledit espacement de traitement (403), ladite paroi périphérique droite (712) s'étendant vers le bas à partir de ladite paroi radiale annulaire partant vers l'extérieur (711) et coopérant avec ladite paroi radiale annulaire (711) pour définir un coin annulaire (710) entre elles ;
le robot de cuisine comprenant en outre :
un filtre annulaire (6) disposé entre ledit boîtier (4) et ladite paroi périphérique droite (712) et coopérant avec ladite paroi périphérique droite (712) pour définir un espace de traitement (405) entre eux ;
dans lequel ladite paroi périphérique droite (712) est formée avec des secondes nervures de traitement espacées (73) qui font saillie dans cette dernière dans ledit espace de traitement (405).

7. Robot de cuisine selon la revendication 6, **caractérisé en ce que** ledit boîtier (4) comprend un siège central creux (30) et un couvercle supérieur (41) qui est installé sur ledit siège central creux (30) et qui coopère avec ledit siège central (30) pour définir ledit espace de logement (101), qui entoure ladite partie supérieure conique (77) et ladite partie inférieure (71), qui coopère avec ladite paroi radiale annulaire (711) pour définir ledit espacement de traitement (403), et qui est formé avec une pluralité d'ailettes de traitement (44) faisant saillie de ce dernier dans ledit espace de hachage (401) et ledit espacement de traitement (403) afin de coopérer avec ladite lame (78) et lesdites premières nervures de traitement (72) pour hacher et appuyer sur la nourriture qui passe à travers l'espace de hachage (401) et l'espacement de traitement (403).

8. Robot de cuisine selon l'une quelconque des revendications 6 à 7, **caractérisé en ce que** ladite partie supérieure conique (77) a des extrémités supérieure et inférieure (774, 775), ladite lame (78) s'étendant de manière hélicoïdale autour de l'axe de rotation (X) de ladite extrémité supérieure (774) à ladite extrémité inférieure (775) de ladite partie supérieure conique (77).

9. Robot de cuisine selon la revendication 7, **caractérisé en ce qu'**il comprend un tube d'entrée (42), ledit couvercle supérieur (41) ayant une paroi supérieure (411), une paroi cylindrique (410) qui s'étend vers le bas à partir de ladite paroi supérieure (411) et une paroi de jupe (412) qui s'évase vers le bas à partir de ladite paroi cylindrique (410), ledit tube interne (42) s'étendant vers le haut à partir de ladite paroi supérieure (411), ladite paroi cylindrique (410) coopérant avec ladite paroi supérieure (411) et ladite partie supérieure conique (77) pour définir ledit espace de hachage (401), ladite paroi de jupe (412) coopérant avec ladite paroi radiale annulaire (711) pour définir ledit espacement de traitement (403), ledit espacement de traitement (403) ayant des extrémités supérieure et inférieure, s'évasant vers le bas à partir d'une extrémité inférieure dudit espace de hachage(401) et étant progressivement rétréci de ladite extrémité supérieure à ladite extrémité inférieure dudit espacement de traitement (403) lorsqu'il est observé en coupe, lesdites ailettes de traitement (44) s'étendant vers le bas et de manière inclinée par rapport l'axe de rotation (X), d'une extrémité supérieure (4101) de ladite paroi cylindrique (410) à une extrémité inférieure (4121) de ladite paroi de jupe (412).

10. Robot de cuisine selon la revendication 9, **caractérisé en ce que** lesdites premières nervures de traitement (72) s'étendent de manière incurvée, lesdites secondes rainures de traitement (73) s'étendant vers le bas et de manière inclinée par rapport à l'axe de rotation (X) à partir desdites premières nervures de traitement (72), respectivement.

11. Robot de cuisine selon la revendication 10, **caractérisé en ce que** ledit couvercle supérieur (41) a en outre un bâti annulaire inférieur (43) qui s'étend vers le bas à partir de ladite paroi de jupe (412), qui entoure de manière coaxiale ladite paroi périphérique droite (712) de ladite partie inférieure (71), et qui définit une pluralité d'ouvertures (431), ledit filtre annulaire (6) étant disposé entre ledit bâti annulaire inférieur (43) et ladite paroi périphérique droite (712) et étant fixé audit bâti annulaire inférieur (43).

12. Robot de cuisine selon la revendication 11, **caractérisé en ce que** ledit espace de traitement (405) a des extrémités supérieure et inférieure, et lorsqu'il est observé en coupe, est progressivement rétréci de ladite extrémité supérieure à ladite extrémité inférieure dudit espace de traitement (405), ledit couvercle supérieur (41) étant en outre formé avec une pluralité de plaques de guidage (45) qui sont angulairement déplacées les unes des autres, chacune desdites plaques de guidage (45) s'étendant vers le bas à partir d'une extrémité inférieure d'une ailette respective desdites ailettes de traitement (44) dans ledit espace de traitement (405), étant disposée entre ledit filtre annulaire (6) et ladite paroi périphérique droite (712), et ayant un côté incliné (451) qui s'étend vers le bas et de manière inclinée par rapport à l'axe de rotation (X) à partir de ladite extrémité inférieure de l'ailette respective desdites ailettes de traitement (44) pour guider les résidus de l'aliment entrant dans ledit espace de traitement (405).

13. Robot de cuisine selon la revendication 11, **caractérisé en ce qu'**il comprend une unité d'entraînement (32) et un siège de base (3) qui a une plaque supérieure (37) et une paroi de montage verticale (311) qui s'étend vers le haut à partir de ladite plaque supérieure (37) et qui est formée avec un évidemment de mise en prise (312), ladite unité d'entraînement (32) étant montée sur ledit siège de base (3), ledit siège central (30) étant installé sur ladite plaque supérieure (37), ledit couvercle supérieur (41) ayant en outre une paroi de bride supérieure annulaire (422) qui part vers l'extérieur à partir de ladite paroi de jupe (412) et qui a une extrémité périphérique (4221), ladite extrémité périphérique (4221) de ladite paroi de bride annulaire (422) étant formée avec une langue de mise en prise (414) qui met en prise, de manière détachable, ledit évidemment de mise en prise (312).

14. Robot de cuisine selon la revendication 13, **caractérisé en ce que** ledit siège central creux (30) a une paroi périphérique externe (330), un tube de décharge de fluide (339) qui s'étend vers l'extérieur à partir de ladite paroi périphérique externe (330), une paroi tubulaire interne (302) qui est entourée par ladite paroi périphérique externe (330) et une paroi étagée annulaire (33) qui s'étend entre ladite paroi périphérique externe (330) et ladite paroi tubulaire interne (302), ladite paroi périphérique externe (330) entourant et coopérant avec ledit filtre annulaire (6) et ladite paroi étagée annulaire (33) pour définir un canal dé fluide (404) entre eux, ledit tube de décharge de fluide (339) étant en communication de fluide avec ledit canal de fluide (404), ledit filtre annulaire (6) étant disposé entre ledit canal de fluide (404) et ledit espace de traitement (405) et permettant la communication de fluide entre ledit espace de traitement (405) et ledit canal de fluide (404), ladite paroi étagée annulaire (33) étant formée avec un trou de sortie de résidus (337) qui est en communication de fluide avec ledit espace de traitement (405).

15. Robot de cuisine selon la revendication 14, **caractérisé en ce que** ladite paroi étagée annulaire (33) a une première partie de marche (332), une première partie de contremarche (305) qui s'étend vers le haut à partir de ladite première partie de marche (332), et une deuxième partie de marche (334) qui est disposée au-dessus de ladite première partie de marche (332) et qui est disposée entre ladite première partie de marche (332) et l'axe de rotation (X), ledit trou de sortie de résidus (337) étant formé dans ladite deuxième partie de marche (334), ladite première partie de marche (332) coopérant avec ladite première partie de contremarche (305) et ladite paroi périphérique externe (330) afin de définir une section inférieure dudit canal de fluide (404).

16. Robot de cuisine selon la revendication 15, **caractérisé en ce que** ladite paroi étagée annulaire (33) a en outre une partie de marche centrale (306) qui part à partir de ladite première partie de contremarche (305) et qui est disposée entre lesdites première et seconde parties de marche (332, 334), une seconde partie de contremarche (307) qui s'étend entre ladite partie de marche centrale (306) et ladite deuxième partie de marche (334), et une pluralité de saillies de limitation (333) qui sont déplacées de manière angulaire les unes par rapport aux autres et qui s'étendent vers le haut à partir d'une extrémité supérieure de ladite première partie de contremarche (305), lesdites saillies de limitation (333) coopérant avec ladite partie de marche centrale (306) et ladite seconde partie de contremarche (307) afin de définir une pluralité de rainures de limitation (308), respectivement, ledit bâti annulaire inférieur (43) ayant une partie inférieure (435) s'étendant dans lesdites rainures de limitation (308), ladite paroi périphérique droite (712) ayant une partie d'extrémité inférieure (7123) qui a une face inclinée annulaire (713) qui est inclinée par rapport à l'axe de rotation (X) et qui est orientée vers ledit filtre annulaire (6) et ladite deuxième partie de marche (334), ladite partie d'extrémité inférieure (7123) de ladite paroi périphérique droite (712) étant formée avec une pluralité de languettes de poussée de résidus (74) qui font saillie vers le bas à partir de ladite face inclinée annulaire (713) vers ledit filtre annulaire (6) et ladite deuxième partie de marche (334) et qui sont angulairement déplacées les unes par rapport aux autres.

17. Robot de cuisine selon la revendication 16, **caractérisé en ce que** ladite deuxième partie de marche (334) est formée avec une goulotte de guidage de résidus annulaire (335) indentée vers le bas à partir de cette dernière, ladite partie d'extrémité inférieure (7123) de ladite paroi périphérique droite (712) ayant en outre une face centrale annulaire (714) qui est disposée au-dessous et vers l'intérieur de ladite face inclinée annulaire (713), qui s'étend dans une direction radiale par rapport à l'axe de rotation (X) et qui est orientée vers ladite goulotte de guidage de résidus (335) et étant en outre formée avec une pluralité de premières dents (75) qui sont angulairement déplacées les unes par rapport aux autres et qui s'étendent vers le bas à partir de ladite face centrale annulaire (714) dans ladite goulotte de guidage de résidus (335), chacune desdites premières dents (75) ayant un côté incliné (751) qui est incliné par rapport à la direction radiale par rapport à l'axe de rotation (X).

18. Robot de cuisine selon la revendication 17, **caractérisé en ce que** ladite paroi étagée annulaire (33) à en outre une troisième partie de marche (336) qui est disposée au-dessus de ladite deuxième partie de marche (334) et entre ladite deuxième partie de marche (334) et l'axe de rotation (X), ladite partie d'extrémité inférieure (7123) de ladite paroi périphérique droite (712) ayant en outre une face interne annulaire (715) qui est disposée au-dessus et vers l'intérieur de ladite face centrale annulaire (714) et qui s'étend dans la direction radiale, et étant en outre formée avec une pluralité de secondes dents (76) qui sont angulairement déplacées les unes par rapport aux autres et qui s'étendent vers le bas à partir de ladite face interne annulaire (715) vers ladite troisième partie de marche (336), chacune desdites secondes dents (76) ayant un côté incliné (761) qui est incliné dans la direction radiale.
